# EUROPEAN PATENT SPECIFICATION

(11) **EP 4 187 137 B1**
(45) Date of publication and mention of the grant of the patent: **15.01.2025**
(21) Application number: 22201048.0
(22) Date of filing: 12.10.2022
(51) Int. Cl.: F16L 47/28, B29C 44/58, F16K 15/03, F16K 15/16

(54) **A ONE-WAY VALVE, A CONSTRUCTION ELEMENT COMPRISING THE ONE-WAY VALVE AND A METHOD OF REALISING THE CONSTRUCTION ELEMENT**
EINWEGVENTIL, BAUELEMENT MIT DEM EINWEGVENTIL UND VERFAHREN ZUR HERSTELLUNG DES BAUELEMENTS
SOUPAPE UNIDIRECTIONNELLE, ÉLÉMENT DE CONSTRUCTION COMPRENANT LA SOUPAPE UNIDIRECTIONNELLE ET PROCÉDÉ DE RÉALISATION DE L'ÉLÉMENT DE CONSTRUCTION

(30) Priority: 25.11.2021 NL 2029907
(43) Date of publication of application: 31.05.2023
(73) Proprietor: Ferlem IP Holding B.V., 5705 CL Helmond (NL)
(72) Inventor: VAN TOER, Mike Johannes Cornelus Wilhelmus, HELMOND (NL); DECKERS, Johannus Henricus Petrus, HELMOND (NL)
(74) Representative: Algemeen Octrooi- en Merkenbureau B.V.

(56) References cited:
- EP-A1- 3 591 272
- WO-A1-2021/019236
- GB-A- 190 926 783
- US-A- 4 053 084

## Description

According to a first aspect, the present disclosure relates to a one-way valve configured to allow a hollow filling element, such as a tube or a hose, to pass through the one-way valve from a first side of said one-way valve to an opposite, second side of said one-way valve, and blocking an insulation material, such as polyurethane, from said second side to said first side of said one-way valve. An example of this type of valves is known from the document US 4 053 084 A.

According to a second aspect, the present disclosure relates to a construction element comprising a one-way valve according to the first aspect of the present disclosure.

According to a third aspect, the present disclosure relates to method of realising a construction element according to the second aspect of the present disclosure.

The one-way valve according to the first aspect of the present disclosure comprises:
- a first body provided with a first opening and first movable elements that are spaced apart along a circumference of said first opening;
- a second body provided with a second opening and second movable elements that are spaced apart along a circumference of said second opening.

Preferably, said first movable elements and said second movable elements are movable between first positions, defining an open state of said one-way valve for allowing said hollow filling element to pass through said one-way valve and second positions, defining a closed state of said one-way valve for blocking said insulation material wherein, in the second positions, said first movable elements and said second movable elements contact each other thereby closing said first opening and said second opening.

Preferably, said second opening is provided at a side of said first opening facing said second side, wherein said second opening is aligned with said first opening for allowing said hollow filling element to pass through said first opening and said second opening.

By providing a first body with first movable element and a second body with second movable elements a one-way valve is realised wherein the first movable elements and the second movable elements cooperate for realising a relative fast and reliable closure of the one-way valve upon removal of the hollow filling element from the one-way valve.

The present disclosure relies at least on the insight that for allowing an individual construction element to be filled in a highly automated production facility a relative fast, reliable and cost effective solution is beneficial for avoiding that the insulation material escapes the construction element via a filling opening that was used for filling the construction element with the insulation material. In this regard it is pointed out that an insulation material such as polyurethane, or the liquid components combined to form polyurethane, is inserted into the construction element, via the hollow filling element, when still being in a liquid state, or at least flowable state. The one-way valve is arranged for avoiding that the polyurethane escapes the construction element via the filling opening not only when solidified, but also when still in the flowable state.

Preferably, each of said first and second movable elements extend in a direction away from said first side.

By providing each of said first and second movable elements such that these elements extend in a direction away from said first side, a force of the polyurethane acting on the first and second movable elements is forcing the first and second movable elements to the second positions. This is beneficial for realising a relative reliable closure of the one-way valve.

Preferably, each of said first and second movable elements extend in a direction away from said first side such that each of said first movable elements extends through the second opening and at least partly between neighbouring second movable elements.

By providing each of said first movable elements such that these extend through the second opening and at least partly between neighbouring second movable elements an opening that may be present between neighbouring second movable elements is closed in the second positions of the first and second movable elements for realising a relative reliable closure of the one-way valve.

Preferably, each of said first movable elements extends at least partly along a side of neighbouring second movable elements facing said first side of said one-way valve for said blocking of said insulation material. This is beneficial for realising an overlap between a respective first movable element of the first movable elements with neighbouring second movable elements for realising a relative reliable closure of the one-way valve.

In an embodiment of the one-way valve, said one-way valve comprises an equal number of first movable elements and second movable elements. This is beneficial for realising a relative fast and reliable closure of the one-way valve while allowing the hollow filling element to pass through the one-way valve when the first and second movable elements are in the first positions.

Preferably, said one-way valve comprises 5 to 15 first movable elements, preferably 10 first movable elements. The present disclosure relies at least partly on the insight that with 5 to 15, preferably 10, first movable elements are relative reliable closure of the one-way valve may be achieved.

It is advantageous if said one-way valve comprises an urging element arranged for urging said second movable elements to said second positions. This is beneficial for realising a relative fast and reliable closure of the one-way valve.

In this regard, it is beneficial if at least a subset of said second movable elements comprise a connection arrangement for connecting said urging element to said subset of said second movable elements.

Preferably, each of said first movable elements comprises a rib extending between neighbouring second movable elements. This is beneficial for realising a relative reliable closure of the one-way valve.

It is beneficial if each of said second movable elements comprises a first protrusion extending at least partly between neighbouring first movable elements. This is beneficial for realising a relative reliable closure of the one-way valve.

Preferably, said first body comprises second protrusions arranged for preventing said first movable element to move beyond said first positions. This is advantageous for realising a one-way valve wherein a space between the hollow filling element and the first movable elements, during use, is predetermined when using the one-way valve in combination with a hollow filling element having a predetermined diameter. This is beneficial for avoiding, or at least significantly reducing the risk of insulation material flowing from the second side of the one-way valve to the first side of the one-way valve when said first movable elements are in the second positions and the hollow filling element is provided through the one-way valve.

Preferably, said second body comprises a receiving space for receiving said first body. This is beneficial for realising a relative compact one-way valve.

It is advantageous if said first movable elements and said second movable elements have a triangular shape. This is beneficial for realising a relative reliable closure of the one-way valve.

Preferably, said one-way valve comprises or consists of a polymer chosen from the group of polyolefins, preferably polypropylenes.

In this regard, it is beneficial if said first movable elements and said second movable elements are movable between said first positions and said second positions by elastic deformation of said polymer.

In an embodiment of the one-way valve, said first movable elements and said second movable elements are configured such that when said first movable elements and said second movable elements are in said second positions a maximum dimension of a gap between neighbouring elements of said first movable elements and said second movable elements is in the range of 0.5 to 1.5 mm, preferably 1.0 mm. The present disclosure relies at least partly on the insight that polyurethane in either the flowable state or the solidified state does not pass an opening in the range of 0.5 to 1.5 mm.

According to the second aspect, the present disclosure relates to a construction element, such as a floor element or a wall element, provided or still to be provided with an insulation material, such as polyurethane, in a receiving space of said construction element, wherein said construction element is provided with at least one filling opening in a side wall of said receiving space and a one-way valve according to any one of the preceding claims, wherein said one-way valve is aligned with said filling opening and connected with said first side to said side wall at a side facing said receiving space for blocking said insulation material.

Embodiments of the one-way valve according to the first aspect of the present disclosure presented previously correspond to or are similar to embodiments of the one-way valve comprised by the construction element according to the second aspect of the present disclosure.

Effects of the one-way valve according to the first aspect of the present disclosure presented previously correspond to or are similar to effects of the construction element according to the second aspect of the present disclosure.

Preferably, said construction element comprises a venting arrangement configured to allow gas to exit said receiving space via said venting arrangement and block said insulation material from exiting, via said venting arrangement, said receiving space.

In this regard, it is advantageous if a venting opening in said venting arrangement is in the range of 0.5 to 1.5 mm, preferably 1.0 mm. A venting opening in this range is beneficial for allowing air to escape the receiving space while maintaining the insulation material inside the receiving space. The present disclosure relies at least partly on the insight that polyurethane in either the flowable state or the solidified state does not pass an opening in the range of 0.5 to 1.5 mm.

According to a third aspect, the present disclosure relates to a method of realising a construction element according to the second aspect of the present disclosure, said method comprising the steps of:
- providing said hollow filling element from said first side of said one-way valve, via said first opening and said second opening, in said receiving space;
- providing said insulation material and/or liquid components for forming said insulation material, via said hollow filling element, into said receiving space; and
- withdrawing said hollow filling element from said construction element and blocking said insulation material at said second side of said one-way valve.

Embodiments of the one-way valve according to the first aspect of the present disclosure presented previously and embodiments of the construction element according to the second aspect of the present disclosure correspond to or are similar to embodiments of the one-way valve and the construction element used during the method according to the third aspect of the present disclosure.

Effects of the one-way valve according to the first aspect of the present disclosure presented previously and embodiments of the construction element according to the second aspect of the present disclosure correspond to or are similar to effects of the method according to the third aspect of the present disclosure.

In this regard, it is beneficial if during said method a manipulation device such as robot or a linear drive is used, wherein said manipulation device is connected to said hollow filling element and moving said hollow filling element during said step of providing in said receiving space and/or moving said hollow filling element during said step of withdrawing. This is beneficial for realising a relative highly automated production facility without the need of a human operator, or at least a significant reduction of the required human labour.

The present disclosure will now be explained by means of a description of an embodiment of a one-way valve in accordance to the first aspect, a construction element in accordance to the second aspect, and a method in accordance to the third aspect, in which reference is made to the following figures, in which:
Fig. 1 discloses an exploded view of a one-way valve according to the first aspect of the present disclosure;
Fig. 2A - 2C disclose respectively a top view, a bottom view, and a side view of a first body of the one-way valve of Fig. 1;
Fig. 3A - 3C disclose respectively a top view, a bottom view, and a side view of a second body of the one-way valve of Fig. 1;
Fig. 4A discloses a top view of the one-way valve of Fig. 1, wherein the one-way valve is in open state;
Fig. 4B discloses cross-section B-B of the one-way valve in open state, as disclosed in Fig. 4A;
Fig. 5A discloses a top view of the one-way valve of Fig. 1, wherein the one-way valve is in closed state;
Fig. 5B discloses cross-section A-A of the one-way valve in closed state, as disclosed in Fig. 5A;
Fig. 6A discloses a cross-sectional view of a construction element according to the second aspect of the present disclosure, including a one-way valve according to the first aspect of the present disclosure, wherein the one-way valve is in open state for allowing a hollow filling element to pass through said one-way valve;
Fig. 6B discloses a cross-sectional view of the construction element of Fig. 6A, wherein the one-way valve is in closed state for blocking an insulation material;
Fig. 7 discloses a front view of a venting arrangement of a construction element according to the second aspect of the present disclosure;
Fig. 8 discloses a method according to the third aspect of the present disclosure.

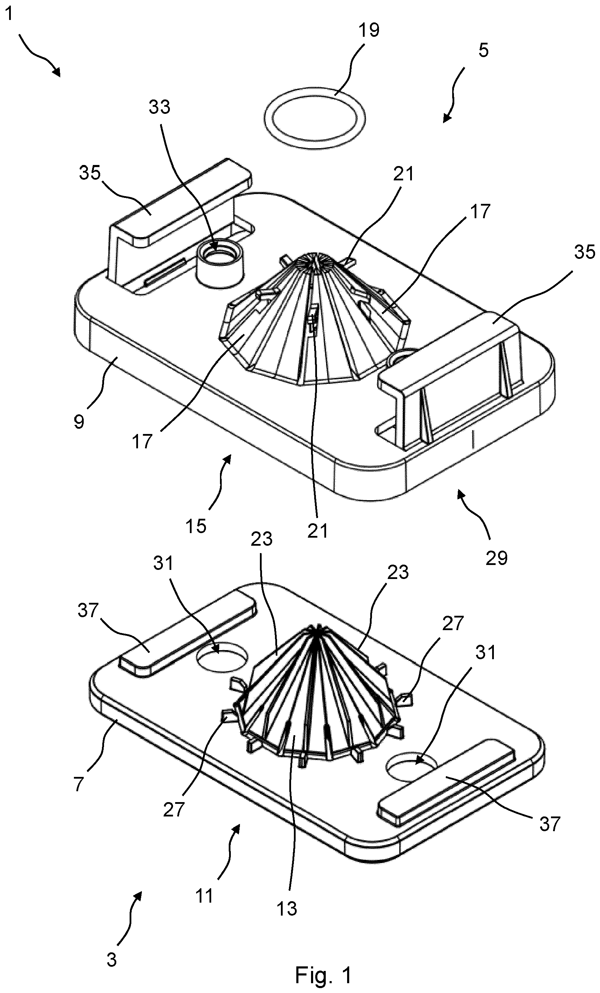

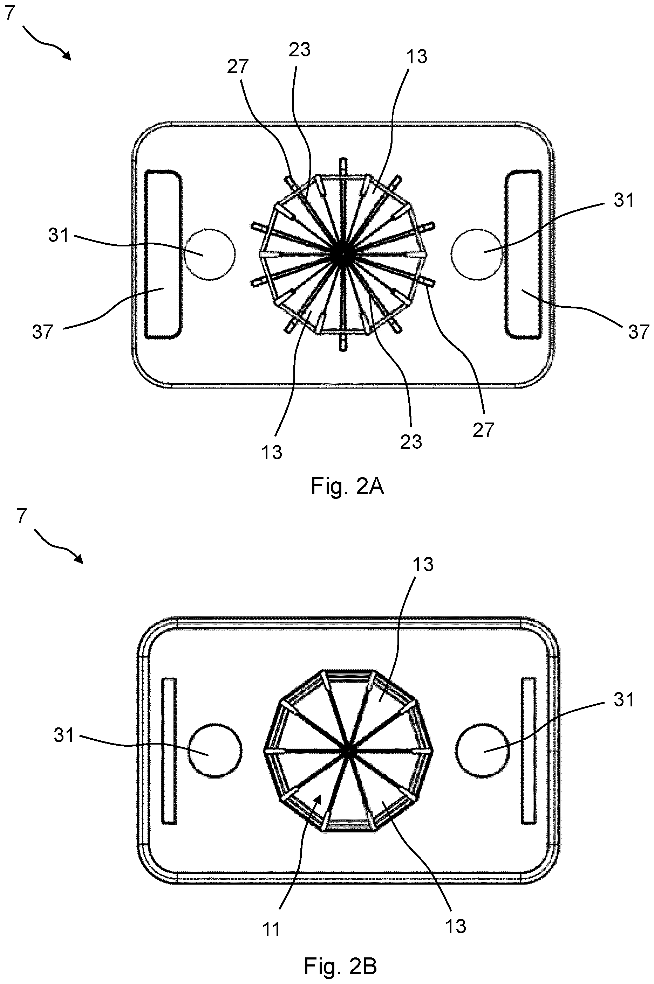

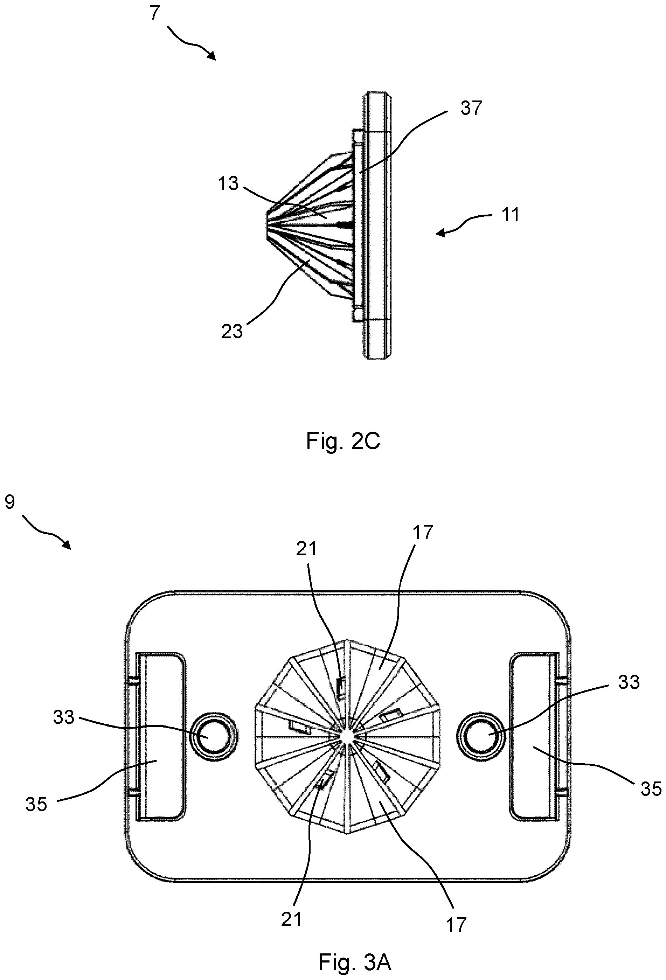

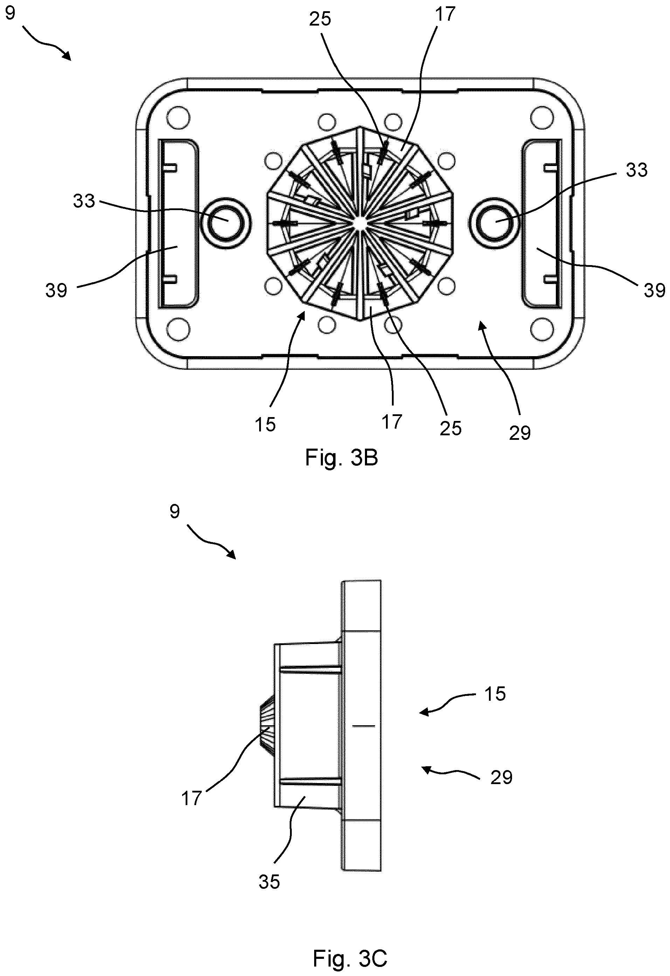

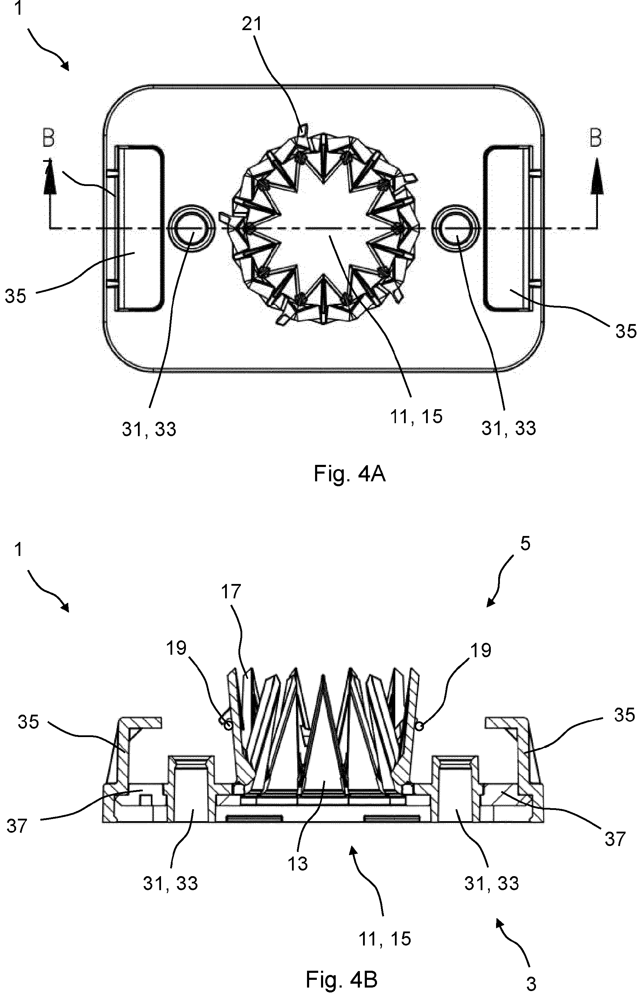

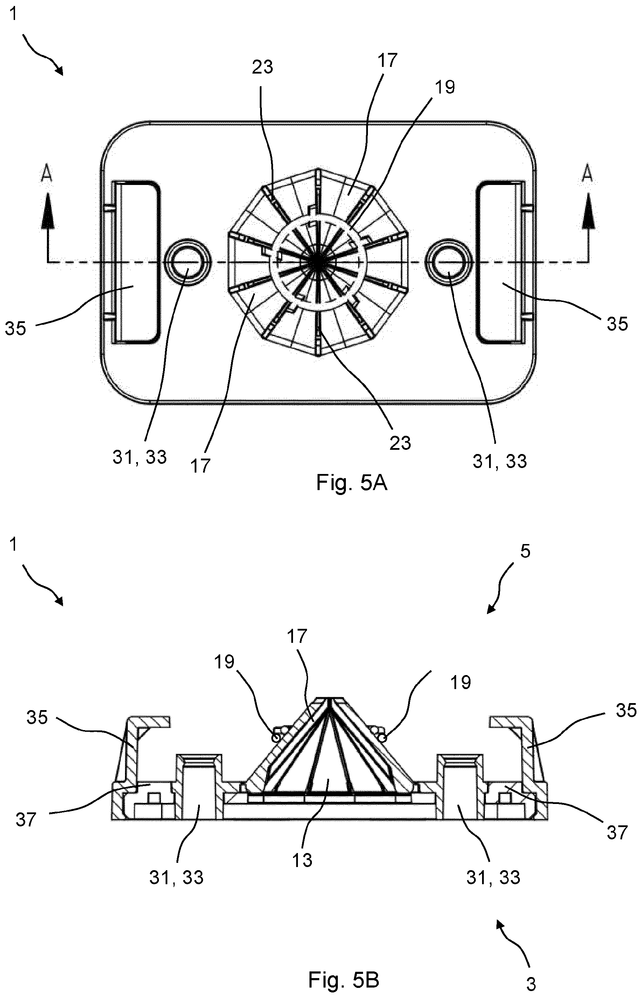

Figures 1 - 5 disclose a one-way valve 1 according to the first aspect of the present disclosure. The one-way valve 1, comprised of a polymer, is configured to allow a hollow filling element 2, such as a tube or a hose, to pass through the one-way valve 1 from a first side 3 of the one-way valve 1 to an opposite, second side 5 of said one-way valve 1. By means of the hollow filling element 2, an insulation material 4, such as polyurethane, is provided in a receiving space 103 located at a side facing the second side 5 of the one-way valve 1. The one-way valve 1 is configured for blocking the insulation material 4 from the second side 5 to the first side 3 of the one-way valve 1. This enables the insulation material 4 to be locked up in the receiving space 103, after the insulation material 4 is provided by the hollow filling element 2 via the one-way valve 1 and after the hollow filling element 1 is drawn back from the one-way valve 1.

The one-way valve 1 comprises a first body 7 and a second body 9, wherein the second body 9 comprises a receiving space 29 for receiving the first body 7. The first body 7 is provided with a first opening 11 and first movable elements 13 that are spaced apart along a circumference of the first opening 11. The second body 9 is provided with a second opening 15 and second movable elements 17 that are spaced apart along a circumference of the second opening 15.

The second opening 15 is provided at a side of the first opening 11 facing the second side 5. The first opening 11 and the second opening 15 are aligned for allowing the hollow filling element 2 to pass through the first opening 11 and the second opening 15.

The one-way valve 1 comprises an equal number of ten first movable elements 13 and ten second movable elements 17, each of them extending in a direction away from the first side 3 and such that each of the first movable elements 13 extend through the second opening 15 and at least partly between neighbouring second movable elements 17.

The first movable elements 13 and the second movable elements 17 are movable between first positions and second positions, by elastic deformation of the polymer. In the first positions, the first and second movable elements 13, 17 define an open state of the one-way valve 1. In the open state of the one-way valve 1, the hollow filling element 2 is allowed to pass through the one-way valve 1 via the first opening 11 and the second opening 15. In the second positions, the first movable elements 13 and the second movable elements 17 contact each other and defining a closed state of the one-way valve 1. In the closed state of the one-way valve 1, the insulation material 4 is blocked for exiting the receiving space 103 via the first opening 11 and the second opening 15.

The first movable elements 13 and the second movable elements 17 are triangular shaped. The second movable elements 17 are positioned with an offset of 18 degrees relative to the first elements 13 along the circumference of the respective first and second openings 11,15, such that each triangle shaped plane of the first movable elements 13 overlaps the free space between two neighbouring second movable elements 17 and vice versa.

Each of the second movable elements 17 comprises a first protrusion 25 extending on a side facing the first side 3. The first protrusions 25 extend, at least partly, between neighbouring first movable elements 13. Each of the first movable elements 13 comprises a rib 23 extending over the length of the triangle shaped plane of each first movable element 13 on a side facing the second side 5. The ribs 23 extend between neighbouring second movable elements 17. The first protrusions 25 and the ribs 23 contribute to realizing a reliable closure of the one-way valve 1 in the closed state.

The first body 7 is provided with ten second protrusions 27. Each second protrusions 27 is positioned in line with one of the ribs 23, such that the second protrusions 27 are positioned against the respective ribs 23 when the first movable elements 13 are in the first positions, thereby preventing the first movable element 13 to move beyond the first positions.

The one-way valve 1 comprises an urging element 19, for example a circular shaped elastic band, arranged for urging the second movable elements 17 to the second positions and thereby urging the one-way valve 1 to the closed state. The urging element 19 is connected to a subset of the second movable elements 17, by means of connection arrangements 21 provided on five of the second movable elements 17.

Due to the provision and hardening of the insulation material 4 to the receiving space 103 at a side facing the second side 5 of the one-way valve 1, additional forces are applied to the second moving elements 17 thereby forcing the one-way valve 1 to the close state. In particular, the insulation material 4 provided between the second moving elements 17 and third protrusions 35, provided on the second body 9, realize an additional reliable closure of the one-way valve 1 in the closed state. Moreover, the protrusions 35 are arranged for anchoring the one-way valve 1, via the second body 9 to the insulation material 4. Recesses 39 in the second body 9 are provided for allowing the second body 9 to be manufactured in a cost effective manner while being provided with the protrusions 35. These recesses 39 are enclosed by complementary fourth protrusions 37, provided in the first body 7, thereby blocking the insulation material 4 for exiting the receiving space 103 via the recesses 39 in a space that may be present between the first body 7 and the second body 9.

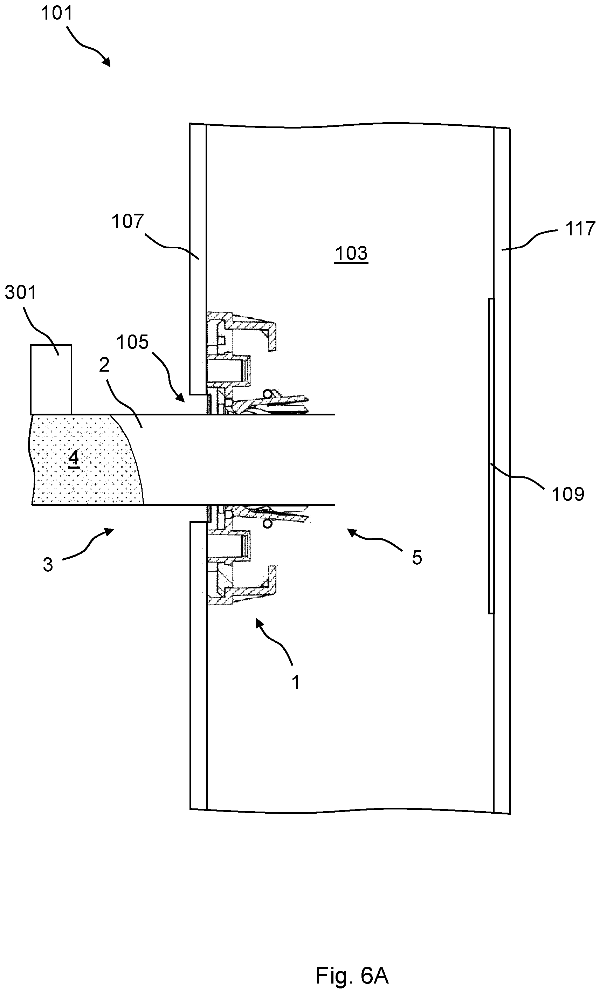

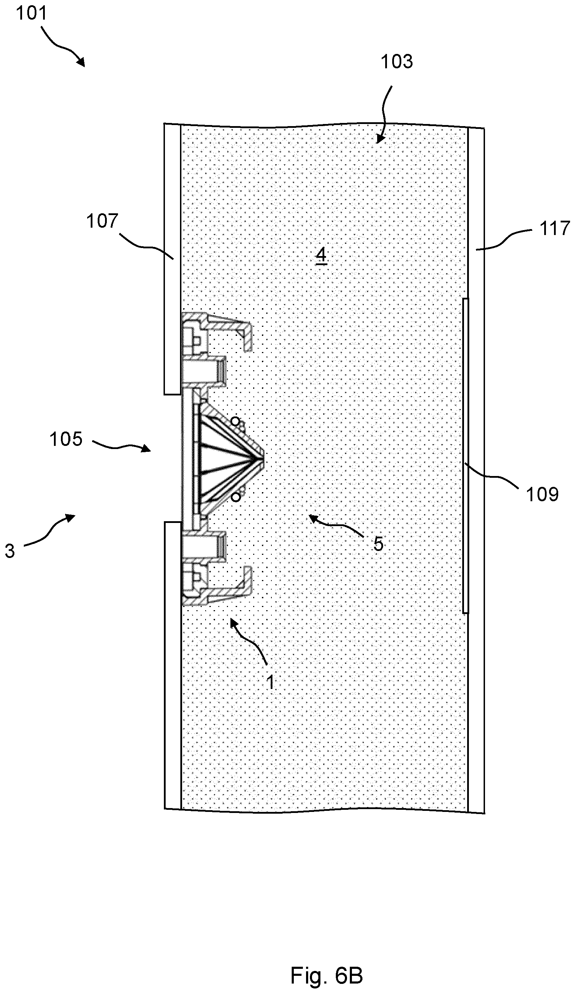

Figures 6A and 6B disclose a construction element 101 according to the second aspect of the present disclosure. The construction element 101 can be for example a floor element or a wall element, comprising a receiving space 103 bounded by two side walls 107, 117 that needs to be provided with insulation material 4 in the receiving space 103.

The construction element 101 is provided with a filling opening 105 in a first side wall 107 and a one-way valve 1 as described above. The one-way valve 1 is aligned with the filling opening 105 in such a way that the hollow filling element 2 can penetrate through the filling opening 105 and the first and second opening 11, 15 of the one-way valve 1. This allows the hollow filling element 2 to pass through the one-way valve 1, and enables an outer end of the hollow filling element 2 to be received in the receiving space 103 of the construction element 101. The one-way valve 1 is connected with the first side 3 to the first side wall 107, at a side facing the receiving space 103 inside the construction element 101. The one-way valve 1 can for example be connected by means of dedicated screws (not shown) that are connected to the first side wall 107, via the first and second through holes 31, 33 provided in the one-way valve 1.

As the hollow filling element 2 penetrates through the first and second opening 11, 15 of the one-way 1, the first movable elements 13 and the second movable elements 17 of the one-way valve 1 are urged by the hollow filling element 2 from the second positions, defining the closed state of the one-way valve 1, to the of the first positions, defining the open state of the one-way valve 1. When the outer end of the hollow filling element 2 is received in the receiving space 103 of the construction element 101, as shown in figure 6A, the receiving space 103 can be provided with the insulation material 4 via the hollow filling element 2.

When the receiving space 103 of the construction element 101 is provided with a predetermined amount of insulation material 4, the hollow filling element 2 is drawn back from the construction element 101. While drawing back the hollow filling element 2, the first movable elements 13 and the second movable elements 17 of the one-way valve 1 are urged back towards the second positions due to the elastic deformation of the polymer and due to the force provided by the circular shaped elastic band 19 connected to the second movable elements 17. When the first movable elements 13 and the second movable elements 17 are in the second positions, the first movable elements 13 and the second movable elements 17 contact each other thereby closing the first opening 11 and the second opening 15. This results in the closed state of the one-way valve 1, as shown in figure 6B, thereby blocking the insulation material 4 for exiting the construction element 101. Due to the denseness of the insulation material provided in the receiving space 103, an additional locking force is provided onto the first movable elements 13 and the second movable elements 17, thereby forcing the one-way valve 1 to maintain the closed state thereof.

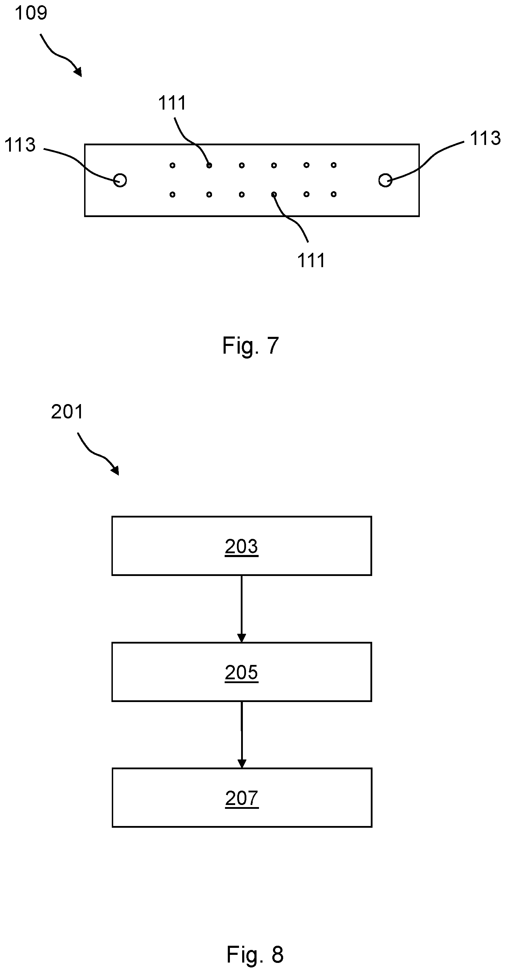

The construction element 101 furthermore comprises a venting arrangement 109, which is shown in more detail in figure 7. The venting arrangement 109 is connected to the second side wall 117, opposite to the first side wall 107, by means of screws (not shown), via third through holes 113. Alternatively it is conceivable that the venting arrangement is connected to the first side wall and/or a further side wall. The venting arrangement 109 is provided with twelve venting openings 111 for allowing gas to exit the receiving space 103 via the venting arrangement 109 and complementary openings in the second side wall 117. The venting openings have a diameter of 1.0 mm for blocking the insulation material 4 from exiting the receiving space 103, via the venting arrangement 109.

Figure 8 discloses a method 201 of realising the construction element 101 as described above, according to the third aspect of the present disclosure. In a first step 203, the hollow filling 2 element is provided from the first side 3 of the one-way valve 1, via the first opening 11 and the second opening 15, in the receiving space 103. In a subsequent step 205, the insulation material 4 and/or liquid components for forming the insulation material 4 is provided, via the hollow filling element 2, into the receiving space 103 of the construction element 101. In a final step 207, the hollow filling element 2 is withdrawn from the construction element 101 and the insulation material 4 is blocked at the second side 5 of the one-way valve 1.

For moving the hollow filling element 2 during the first step 205 and the last step 207, preferably a manipulation device 301 such as robot or a linear drive connected to said hollow filling element 2 is used.

## Claims

1. A one-way valve (1) configured to allow a hollow filling element (2), such as a tube or a hose, to pass through the one-way valve (1) from a first side (3) of said one-way valve (1) to an opposite, second side (5) of said one-way valve (1), and blocking an insulation material (4), such as polyurethane, from said second side (5) to said first side (3) of said one-way valve (1), said one-way valve (1) comprising:
- a first body (7) provided with a first opening (11) and first movable elements (13) that are spaced apart along a circumference of said first opening (11);
- a second body (9) provided with a second opening (15) and second movable elements (17) that are spaced apart along a circumference of said second opening (15);
wherein said first movable elements (13) and said second movable elements (17) are movable between first positions, defining an open state of said one-way valve (1) for allowing said hollow filling element (2) to pass through said one-way valve (1) and second positions, defining a closed state of said one-way valve (1) for blocking said insulation material (4) wherein, in the second positions, said first movable elements (13) and said second movable elements (17) contact each other thereby closing said first opening (11) and said second opening (15);
wherein said second opening (15) is provided at a side of said first opening (11) facing said second side (5), wherein said second opening (15) is aligned with said first opening (11) for allowing said hollow filling element (2) to pass through said first opening (11) and said second opening (15); and
wherein each of said first and second movable elements (13, 17) extend in a direction away from said first side (3) and such that each of said first movable elements (13) extends through the second opening (15) and at least partly between neighbouring second movable elements (17).

2. The one-way valve (1) according to claim 1, wherein said one-way valve (1) comprises an equal number of first movable elements (13) and second movable elements (17).

3. The one-way valve (1) according to claim 1 or 2, wherein said one-way valve (1) comprises 5 to 15 first movable elements (13), preferably 10 first movable elements (13).

4. The one-way valve (1) according to any one of the preceding claims, wherein said one-way valve (1) comprises an urging element (19) arranged for urging said second movable elements (17) to said second positions.

5. The one-way valve (1) according to claim 4, wherein at least a subset of said second movable elements (17) comprise a connection arrangement (21) for connecting said urging element (19) to said subset of said second movable elements (17).

6. The one-way valve (1) according to any one of the preceding claims, wherein each of said first movable elements (13) comprises a rib (23) extending between neighbouring second movable elements (17).

7. The one-way valve (1) according to any one of the preceding claims, wherein each of said second movable elements (17) comprises a first protrusion (25) extending at least partly between neighbouring first movable elements (13).

8. The one-way valve (1) according to any one of the preceding claims, wherein said first body (7) comprises second protrusions (27) arranged for preventing said first movable element (13) to move beyond said first positions.

9. The one-way valve (1) according to any one of the preceding claims, wherein said second body (9) comprises a receiving space (29) for receiving said first body (7).

10. The one-way valve (1) according to any one of the preceding claims, wherein said first movable elements (13) and said second movable elements (17) have a triangular shape.

11. The one-way valve (1) according to any one of the preceding claims, wherein said one-way valve (1) comprises or consists of a polymer chosen from the group of polyolefins, preferably polypropylenes, preferably wherein said first movable elements (13) and said second movable elements (17) are movable between said first positions and said second positions by elastic deformation of said polymer.

12. A construction element (101), such as a floor element or a wall element, provided or still to be provided with an insulation material (4), such as polyurethane, in a receiving space (103) of said construction element (101), wherein said construction element (101) is provided with at least one filling opening (105) in a side wall (107) of said receiving space (103) and a one-way valve (1) according to any one of the preceding claims, wherein said one-way valve (1) is aligned with said filling opening (105) and connected with said first side (3) to said side wall (107) at a side facing said receiving space (103) for blocking said insulation material (4).

13. The construction element (101) according to claim 12, wherein said construction element (101) comprises a venting arrangement (109) configured to allow gas to exit said receiving space (103) via said venting arrangement (109) and block said insulation material (4) from exiting, via said venting arrangement (109), said receiving space (103), preferably wherein a venting opening (111) in said venting arrangement (109) is in the range of 0.5 to 1.5 mm, preferably 1.0 mm.

14. A method (201) of realising a construction element (101) according to claim 12 or 13, said method (102) comprising the steps of:
- providing (203) said hollow filling element (2) from said first side (3) of said one-way valve (1), via said first opening (11) and said second opening (15), in said receiving space (103);
- providing (205) said insulation material (4) and/or liquid components for forming said insulation material (4), via said hollow filling element (2), into said receiving space (103); and
- withdrawing (207) said hollow filling element (2) from said construction element (101) and blocking said insulation material (4) at said second side (5) of said one-way valve (1).

15. The method (201) according to claim 14 using a manipulation device (301) such as robot or a linear drive connected to said hollow filling element (2) and moving said hollow filling element (2) during said step of providing (205) in said receiving space (103) and/or moving said hollow filling element (2) during said step of withdrawing (207).

## Patentansprüche

1. Einwegventil (1), das dazu konfiguriert ist, zu gestatten, dass ein hohles Füllelement (2), wie z. B. ein Rohr oder ein Schlauch, durch das Einwegventil (1) von einer ersten Seite (3) des Einwegventils (1) zu einer gegenüberliegenden zweiten Seite (5) des Einwegventils (1) hindurchgeht, und ein Isoliermaterial (4), wie z. B. Polyurethan, von der zweiten Seite (5) zu der ersten Seite (3) des Einwegventils (1) blockiert, wobei das Einwegventil (1) Folgendes umfasst:
- einen ersten Körper (7), der mit einer ersten Öffnung (11) und ersten beweglichen Elementen (13), die entlang einem Umfang der ersten Öffnung (11) voneinander beabstandet sind, versehen ist;
- einen zweiten Körper (9), der mit einer zweiten Öffnung (15) und zweiten beweglichen Elementen (17), die entlang einem Umfang der zweiten Öffnung (15) voneinander beabstandet sind, versehen ist;
wobei die ersten beweglichen Elemente (13) und die zweiten beweglichen Elemente (17) zwischen ersten Positionen, die einen geöffneten Zustand des Einwegventils (1), um zu gestatten, dass das hohle Füllelement (2) durch das Einwegventil (1) hindurchgeht, definieren, und zweiten Positionen, die einen geschlossenen Zustand des Einwegventils (1) zum Blockieren des Isoliermaterials (4) definieren, beweglich sind, wobei sich in den zweiten Positionen die ersten beweglichen Elemente (13) und die zweiten beweglichen Elemente (17) berühren und dadurch die erste Öffnung (11) und die zweite Öffnung (15) verschließen;
wobei die zweite Öffnung (15) an einer der zweiten Seite (5) zugewandten Seite der ersten Öffnung (11) vorgesehen ist, wobei die zweite Öffnung (15) dahingehend auf die erste Öffnung (11) ausgerichtet ist, zu gestatten, dass das hohle Füllelement (2) durch die erste Öffnung (11) und die zweite Öffnung (15) hindurchgeht; und
wobei sich sowohl die ersten als auch die zweiten beweglichen Elemente (13, 17) in einer von der ersten Seite (3) weg verlaufenden Richtung erstrecken und so, dass sich jedes der ersten beweglichen Elemente (13) durch die zweite Öffnung (15) und zumindest zum Teil zwischen benachbarten zweiten beweglichen Elementen (17) erstreckt.

2. Einwegventil (1) nach Anspruch 1, wobei das Einwegventil (1) eine gleiche Anzahl an ersten beweglichen Elementen (13) und zweiten beweglichen Elementen (17) umfasst.

3. Einwegventil (1) nach Anspruch 1 oder 2, wobei das Einwegventil (1) 5 bis 15 erste bewegliche Elemente (13), vorzugsweise 10 erste bewegliche Elemente (13), umfasst.

4. Einwegventil (1) nach einem der vorhergehenden Ansprüche, wobei das Einwegventil (1) ein Drückelement (19) umfasst, das dahingehend angeordnet ist, die zweiten beweglichen Elemente (17) zu den zweiten Positionen zu drücken.

5. Einwegventil (1) nach Anspruch 4, wobei mindestens eine Teilmenge der zweiten beweglichen Elemente (17) eine Verbindungsanordnung (21) zum Verbinden des Drückelements (19) mit der Teilmenge der zweiten beweglichen Elemente (17) umfasst.

6. Einwegventil (1) nach einem der vorhergehenden Ansprüche, wobei jedes der ersten beweglichen Elemente (13) eine Rippe (23) umfasst, die sich zwischen benachbarten zweiten beweglichen Elementen (17) erstreckt.

7. Einwegventil (1) nach einem der vorhergehenden Ansprüche, wobei jedes der zweiten beweglichen Elemente (17) einen ersten Vorsprung (25) umfasst, der sich zumindest teilweise zwischen benachbarten ersten beweglichen Elementen (13) erstreckt.

8. Einwegventil (1) nach einem der vorhergehenden Ansprüche, wobei der erste Körper (7) zweite Vorsprünge (27) umfasst, die dahingehend angeordnet sind, zu verhindern, dass sich das erste bewegliche Element (13) über die ersten Positionen hinaus bewegt.

9. Einwegventil (1) nach einem der vorhergehenden Ansprüche, wobei der zweite Körper (9) einen Aufnahmeraum (29) zur Aufnahme des ersten Körpers (7) umfasst.

10. Einwegventil (1) nach einem der vorhergehenden Ansprüche, wobei die ersten beweglichen Elemente (13) und die zweiten beweglichen Elemente (17) eine dreieckige Form aufweisen.

11. Einwegventil (1) nach einem der vorhergehenden Ansprüche, wobei das Einwegventil (1) ein Polymer aus der Gruppe der Polyolefine, vorzugsweise Polypropylene, umfasst oder daraus besteht, vorzugsweise wobei die ersten beweglichen Elemente (13) und die zweiten beweglichen Elemente (17) zwischen den ersten Positionen und den zweiten Positionen durch elastische Verformung des Polymers beweglich sind.

12. Bauelement (101), wie z. B. ein Bodenelement oder ein Wandelement, das mit einem Isoliermaterial (4), wie z. B. Polyurethan, in einem Aufnahmeraum (103) des Bauelements (101) versehen ist oder noch damit versehen wird, wobei das Bauelement (101) mit mindestens einer Füllöffnung (105) in einer Seitenwand (107) des Aufnahmeraums (103) und einem Einwegventil (1) nach einem der vorhergehenden Ansprüche versehen ist, wobei das Einwegventil (1) auf die Füllöffnung (105) ausgerichtet und mit der ersten Seite (3) mit der Seitenwand (107) an einer dem Aufnahmeraum (103) zugewandten Seite zum Blockieren des Isoliermaterials (4) verbunden ist.

13. Bauelement (101) nach Anspruch 12, wobei das Bauelement (101) eine Entlüftungsanordnung (109) umfasst, die dazu konfiguriert ist, zu gestatten, dass Gas über die Entlüftungsanordnung (109) aus dem Aufnahmeraum (103) austritt, und Austreten des Isoliermaterials (4) aus dem Aufnahmeraum (103) über die Entlüftungsanordnung (109) zu blockieren, vorzugsweise wobei eine Entlüftungsöffnung (111) in der Entlüftungsanordnung (109) im Bereich von 0,5 bis 1,5 mm, vorzugsweise 1,0 mm, liegt.

14. Verfahren (201) zur Realisierung eines Bauelements (101) nach Anspruch 12 oder 13, wobei das Verfahren (102) die folgenden Schritte umfasst:
- Zuführen (203) des hohlen Füllelements (2) von der ersten Seite (3) des Einwegventils (1) über die erste Öffnung (11) und die zweite Öffnung (15) in den Aufnahmeraum (103);
- Zuführen (205) des Isoliermaterials (4) und/oder flüssiger Komponenten zur Bildung des Isoliermaterials (4) über das hohle Füllelement (2) in den Aufnahmeraum (103); und
- Herausziehen (207) des hohlen Füllelements (2) aus dem Bauelement (101) und Blockieren des Isoliermaterials (4) an der zweiten Seite (5) des Einwegventils (1).

15. Verfahren (201) nach Anspruch 14, bei dem eine Manipulationsvorrichtung (301), wie z. B. ein Roboter oder ein Linearantrieb, verwendet wird, die mit dem hohlen Füllelement (2) verbunden ist und das hohle Füllelement (2) während des Schrittes des Zuführens (205) in den Aufnahmeraum (103) bewegt und/oder das hohle Füllelement (2) während des Schritts des Herausziehens (207) bewegt.

## Revendications

1. Soupape unidirectionnelle (1) configurée pour permettre à un élément de remplissage creux (2), tel qu'un tube ou un tuyau souple, de passer à travers la soupape unidirectionnelle (1) d'un premier côté (3) de ladite soupape unidirectionnelle (1) à un second côté opposé (5) de ladite soupape unidirectionnelle (1), et bloquant un matériau isolant (4), tel que du polyuréthane, dudit second côté (5) audit premier côté (3) de ladite soupape unidirectionnelle (1), ladite soupape unidirectionnelle (1) comprenant :
- un premier corps (7) pourvu d'une première ouverture (11) et de premiers éléments mobiles (13) qui sont espacés le long d'une circonférence de ladite première ouverture (11) ;
- un second corps (9) pourvu d'une seconde ouverture (15) et de seconds éléments mobiles (17) qui sont espacés le long d'une circonférence de ladite seconde ouverture (15) ;
dans laquelle lesdits premiers éléments mobiles (13) et lesdits seconds éléments mobiles (17) sont mobiles entre des premières positions, définissant un état ouvert de ladite soupape unidirectionnelle (1) pour permettre audit élément de remplissage creux (2) de passer à travers ladite soupape unidirectionnelle (1) et des secondes positions, définissant un état fermé de ladite soupape unidirectionnelle (1) pour bloquer ledit matériau isolant (4), dans laquelle, dans les secondes positions, lesdits premiers éléments mobiles (13) et lesdits seconds éléments mobiles (17) entrent en contact les uns avec les autres, fermant ainsi ladite première ouverture (11) et ladite seconde ouverture (15) ;
dans laquelle ladite seconde ouverture (15) est prévue sur un côté de ladite première ouverture (11) faisant face audit second côté (5), dans laquelle ladite seconde ouverture (15) est alignée avec ladite première ouverture (11) pour permettre audit élément de remplissage creux (2) de passer à travers ladite première ouverture (11) et ladite seconde ouverture (15) ; et
dans laquelle chacun desdits premier et second éléments mobiles (13, 17) s'étend dans une direction s'éloignant dudit premier côté (3) et de sorte que chacun desdits premiers éléments mobiles (13) s'étend à travers la seconde ouverture (15) et au moins partiellement entre des seconds éléments mobiles voisins (17).

2. Soupape unidirectionnelle (1) selon la revendication 1, dans laquelle ladite soupape unidirectionnelle (1) comprend un nombre égal de premiers éléments mobiles (13) et de seconds éléments mobiles (17).

3. Soupape unidirectionnelle (1) selon la revendication 1 ou 2, dans laquelle ladite soupape unidirectionnelle (1) comprend 5 à 15 premiers éléments mobiles (13), de préférence 10 premiers éléments mobiles (13).

4. Soupape unidirectionnelle (1) selon l'une quelconque des revendications précédentes, dans laquelle ladite soupape unidirectionnelle (1) comprend un élément de poussée (19) agencé pour pousser lesdits seconds éléments mobiles (17) vers lesdites secondes positions.

5. Soupape unidirectionnelle (1) selon la revendication 4, dans laquelle au moins un sous-ensemble desdits seconds éléments mobiles (17) comprend un agencement de liaison (21) pour relier ledit élément de poussée (19) audit sous-ensemble desdits seconds éléments mobiles (17).

6. Soupape unidirectionnelle (1) selon l'une quelconque des revendications précédentes, dans laquelle chacun desdits premiers éléments mobiles (13) comprend une nervure (23) s'étendant entre des seconds éléments mobiles voisins (17).

7. Soupape unidirectionnelle (1) selon l'une quelconque des revendications précédentes, dans laquelle chacun desdits seconds éléments mobiles (17) comprend une première saillie (25) s'étendant au moins partiellement entre des premiers éléments mobiles voisins (13).

8. Soupape unidirectionnelle (1) selon l'une quelconque des revendications précédentes, dans laquelle ledit premier corps (7) comprend des secondes saillies (27) agencées pour empêcher ledit premier élément mobile (13) de se déplacer au-delà desdites premières positions.

9. Soupape unidirectionnelle (1) selon l'une quelconque des revendications précédentes, dans laquelle ledit second corps (9) comprend un espace de réception (29) pour recevoir ledit premier corps (7).

10. Soupape unidirectionnelle (1) selon l'une quelconque des revendications précédentes, dans laquelle lesdits premiers éléments mobiles (13) et lesdits seconds éléments mobiles (17) ont une forme triangulaire.

11. Soupape unidirectionnelle (1) selon l'une quelconque des revendications précédentes, dans laquelle ladite soupape unidirectionnelle (1) comprend ou est constituée d'un polymère choisi dans le groupe des polyoléfines, de préférence des polypropylènes, de préférence dans laquelle lesdits premiers éléments mobiles (13) et lesdits seconds éléments mobiles (17) sont mobiles entre lesdites premières positions et lesdites secondes positions par déformation élastique dudit polymère.

12. Élément de construction (101), tel qu'un élément de plancher ou un élément mural, pourvu ou devant encore être pourvu d'un matériau isolant (4), tel que du polyuréthane, dans un espace de réception (103) dudit élément de construction (101), dans lequel ledit élément de construction (101) est pourvu d'au moins une ouverture de remplissage (105) dans une paroi latérale (107) dudit espace de réception (103) et d'une soupape unidirectionnelle (1) selon l'une quelconque des revendications précédentes, dans lequel ladite soupape unidirectionnelle (1) est alignée avec ladite ouverture de remplissage (105) et reliée avec ledit premier côté (3) à ladite paroi latérale (107) sur un côté faisant face audit espace de réception (103) pour bloquer ledit matériau isolant (4).

13. Élément de construction (101) selon la revendication 12, dans lequel ledit élément de construction (101) comprend un agencement d'aération (109) configuré pour permettre au gaz de sortir dudit espace de réception (103) via ledit agencement d'aération (109) et empêcher ledit matériau isolant (4) de sortir, via ledit agencement d'aération (109), dudit espace de réception (103), de préférence dans lequel une ouverture d'aération (111) dans ledit agencement d'aération (109) se trouve dans la plage allant de 0,5 à 1,5 mm, de préférence est de 1,0 mm.

14. Procédé (201) de réalisation d'un élément de construction (101) selon la revendication 12 ou 13, ledit procédé (102) comprenant les étapes de :
- fourniture (203) dudit élément de remplissage creux (2) depuis ledit premier côté (3) de ladite soupape unidirectionnelle (1), via ladite première ouverture (11) et ladite seconde ouverture (15), dans ledit espace de réception (103) ;
- fourniture (205) dudit matériau isolant (4) et/ou de composants liquides pour former ledit matériau isolant (4), via ledit élément de remplissage creux (2), dans ledit espace de réception (103) ; et
- retrait (207) dudit élément de remplissage creux (2) dudit élément de construction (101) et blocage dudit matériau isolant (4) sur ledit second côté (5) de ladite soupape unidirectionnelle (1).

15. Procédé (201) selon la revendication 14 utilisant un dispositif de manipulation (301) tel qu'un robot ou un dispositif d'entraînement linéaire relié audit élément de remplissage creux (2) et déplaçant ledit élément de remplissage creux (2) pendant ladite étape de fourniture (205) dans ledit espace de réception (103) et/ou déplaçant ledit élément de remplissage creux (2) pendant ladite étape de retrait (207).
